# EUROPÄISCHE PATENTANMELDUNG

(11) **EP 1 337 051 A1**
(43) Veröffentlichungstag der Anmeldung: **20.08.2003**
(21) Anmeldenummer: 02405108.8
(22) Anmeldetag: 13.02.2002
(51) Int. Cl.: H04B 3/46

(54) **Verfahren und System zum Bestimmen der Übertragungseigenschaften eines elektrisch leitfähigen Kanals**

(71) Anmelder: ABB RESEARCH LTD., 8050 Zürich (CH)
(72) Erfinder: Sabbattini, Bruno, 5430 Wettingen (CH); Lehmann, Josef, 79761 Waldshut-Tiengen (DE)
(74) Vertreter: ABB Patent Attorneys

(57) **Zusammenfassung**

Das erfindungsgemässe Verfahren, bei welchem zum Bestimmen der Dämpfung und des Phasengangs unterschiedliche elektrische Signale von einem Signalgenerator (2) erzeugt und an einer ersten Stelle in den elektrisch leitfähigen Übertragungskanal (1) eingespiesen werden, und die Signale an einer zweiten Stelle des Übertragungskanals gemessen und ausgewertet werden, wobei zum Bestimmen der Dämpfung ein analoges Sinussignal (3) und zum Bestimmen des Phasengangs eine zu Diracstossähnlichen Funktionen autokorrelierende binäre Sequenz (4) in den Übertragungskanal eingespiesen wird, ist dadurch gekennzeichnet, dass das analoge Sinussignal und die binäre Sequenz von einem und dem selben, portablen analogen Signalgenerator (2) erzeugt werden.

Auf einen zweiten, digitalen Signalgenerator, oder einen entsprechend teureren Signalgenerator, welcher sowohl analoge als auch digitale Signale erzeugt, kann mit dem erfindungsgemässen Verfahren verzichtet werden.

## Beschreibung

### Technisches Gebiet

Die vorliegende Erfindung bezieht sich auf das Gebiet der Kommunikationstechnik. Sie betrifft ein Verfahren zum Bestimmen der Übertragungseigenschaften eines elektrisch leitfähigen Kanals zum Übertragen von elektrischen Kommunikationssignalen sowie ein System zum Bestimmen der Übertragungseigenschaften eines elektrisch leitfähigen Kanals zum Übertragen von elektrischen Kommunikationssignalen.

### Stand der Technik

Bei der Nutzung von bestehenden Kanälen wie zum Beispiel Gas-, Wasser- oder Stromleitungen als Kommunikationsleitungen ergibt sich oftmals das Problem, dass die Kanäle nicht für den Kommunikationsbedarf ausgelegt und dahingehend optimiert worden sind und somit deren Parameter in bezug auf die Kommunikationsanwendungen wie Dämpfung, Phasengang oder Rauschen ungenügend oder gar nicht bekannt sind.

Für Laboranwendungen sind Messgeräte bekannt, beispielsweise Netzwerk- oder Spektrumsanalysatoren, welche zur Bestimmung der Parameter verwendet werden könnten. Solche Messgeräte sind jedoch schwer und unhandlich lassen sich für das Bestimmen der Kommunikationsparameter der oftmals über mehrere Kilometer verteilten Kanäle nicht ohne weiteres einsetzen. Aufgrund der normalerweise nicht vorhandenen Synchronisation weitverteilter Messgeräte können zudem insbesondere Phaseninformationen nicht gemessen werden.

Für Dämpfungsmessungen wird mit Vorteil mit einem die Frequenz ändernden analogen Sinussignal als Quelle gearbeitet.

Zur Bestimmung der Phaseninformation wird die Impulsantwort des Übertragungskanals gemessen wozu eine zu Diracstoss ähnlichen Funktionen autokorrelierende pseudo-zufällige Bitfolge (Pseudo Random Bit Sequenz, PRBS) verwendet wird, welche beispielsweise mit einem eigens dafür vorgesehenen Binäre-Sequenz-Generator erzeugt werden kann. In *"A Novel Method for Measuring the Characteristics of the Powerline Channel for High Speed Communications", S. Ramseier, et al, Proceedings of the 1998 International Symposium on Powerline Communications and its Applications, Soka University, Tokyo, 1998* ist ein Messprinzip beschrieben, bei welchem die Impulsantwort eines Übertragungskanals gemessen wird, und damit die Phaseninformation des Kanals auch ohne Synchronisation auf weit verteilten Leitungen gewonnen werden kann.

Für beide Arten der genannten Signalgeneratoren sind heute handliche Geräte auf dem Markt erhältlich. Allerdings sind Geräte, welche beide Arten von Signalen generieren können, schwer und unhandlich, und somit für den Feldeinsatz nur bedingt geeignet.

### Kurze Darstellung der Erfindung

Es ist die Aufgabe der vorliegenden Erfindung, ein einfaches Verfahren und ein System zum Bestimmen der Übertragungseigenschaften eines elektrisch leitfähigen Kanals zum Übertragen von Kommunikationssignalen der eingangs genannten Art zu schaffen, welche auch bei weitverteilten Kanälen angewandt bzw. eingesetzt werden können.

Die Aufgabe wird mit einem Verfahren mit den Merkmalen des Patentanspruchs 1 sowie einem System mit den Merkmalen des Patentanspruchs 10 gelöst.

Das erfindungsgemässe Verfahren bei welchem zum Bestimmen der Dämpfung und/oder des Phasengangs eine zu Diracstoss-ähnlichen Funktionen autokorrelierende binäre Sequenz an einer ersten Stelle in den Übertragungskanal eingespiesen und das Signal an einer zweiten Stelle des Übertragungskanals gemessen und ausgewertet wird, zeichnet sich dadurch aus, dass die binäre Sequenz als in einem portablen, analogen Signalgenerator programmierte Abfolge von analogen Werten erzeugt wird.

Der analoge Signalgenerator, welcher beispielsweise für einfache Dämpfungsmessungen verwendet werden kann, ersetzt einen zusätzlichen und teuren Binär-Sequenz-Generator.

In einer vorteilhaften Ausführungsform werden zum Bestimmen der Dämpfung und des Phasengangs unterschiedliche Signale von einem und demselben Signalgenerator erzeugt und an einer ersten Stelle in den Übertragungskanal eingespiesen. Zum Bestimmen der Dämpfung wird ein analoges Sinussignal und zum Bestimmen des Phasengangs die binäre Sequenz in den Übertragungskanal eingespiesen, wobei das analoge Sinussignal und die binäre Sequenz von einem und dem selben, portablen analogen Signalgenerator erzeugt werden.

Ein portabler analoger Signalgenerator wird zum Erzeugen einer binären Sequenz verwendet. Vorteilhafterweise verfügt der Signalgenerator über mindestens zwei Betriebsmodi, zwischen denen umgeschaltet werden kann, wobei in einem ersten Betriebsmodus das analoge Sinussignal und in einem zweiten Betriebsmodus die binäre Sequenz erzeugt werden. Zwischen den Betriebsmodi wird vorteilhafterweise ferngesteuert umgeschaltet, beispielsweise durch die entsprechende Vorrichtung zum Messen und Auswerten der Signale.

Auf einen zweiten, digitalen Signalgenerator, oder einen entsprechend teureren Signalgenerator, welcher sowohl analoge als auch digitale Signale erzeugt, kann mit dem erfindungsgemässen Verfahren verzichtet werden. Der portable analoge Signalgenerator kann zudem einfach von Messort zu Messort transportiert werden.

### Kurze Beschreibung der Zeichnungen

Anschliessend wird das erfindungsgemässe Verfahren und das erfindungsgemässe System anhand einer Zeichnung genauer erläutert. Dabei zeigen:
- Fig.1: eine schematische Darstellung des erfindungsgemässen Systems zum Bestimmen der Übertragungseigenschaften eines elektrisch leitfähigen Kanals zum Übertragen von elektrischen Kommunikationssignalen, und
- Fig.2: eine schematische Darstellung des erfindungsgemässen Systems zum Bestimmen der Übertragungseigenschaften mehrerer elektrisch leitfähiger Kanäle zum Übertragen von elektrischen Kommunikationssignalen.

### Weg zur Ausführung der Erfindung

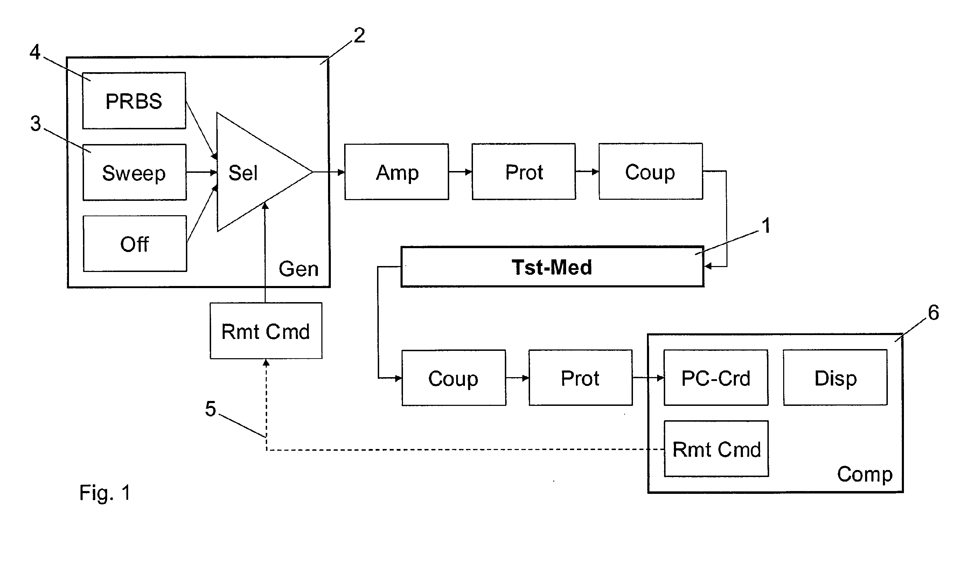

Fig. 1 zeigt schematisch das erfindungsgemässe System mit einem elektrisch leitfähigen Kanal 1 zum Übertragen von elektrischen Kommunikationssignalen, dessen Übertragungseigenschaften zu bestimmen sind, einem Signalgenerator 2 sowie einer Mess- und Auswertevorrichtung 6.

Beim Kanal handelt es sich beispielsweise um eine bestehende Gas-, Wasser- oder Stromleitung, welche zum Übertragen von elektrischen Kommunikationssignalen genutzt werden soll.

Das Signal vom Signalgenerator wird vor dem Einspeisen in den Übertragungskanal 1 verstärkt (Amp). Über entsprechende Zwischenstücke zum Einkoppeln (Prot), (Coup) wird das Signal an einer ersten Stelle in den Übertragungskanal eingespiesen. An einer zweiten Stelle des Übertragungskanals wird das Signal gemessen, wobei wiederum entsprechende Zwischenstücke zum Entkoppeln des Signals (Prot), (Coup) verwendet werden.

Beim Signalgenerator 2 handelt es sich um einen analogen Signalgenerator mit mehreren Betriebsmodi zwischen denen manuell oder automatisch umgeschaltet werden kann. Dem Signalgenerator kann eine Abfolge von Analogwerten einprogrammiert werden, welche dann zum Erzeugen des entsprechenden Signals abgespielt werden kann.

In einem ersten Betriebsmodus wird ein einfaches Sinussignal (Sweep) 3 erzeugt. Dieses Signal ist normalerweise von einem analogen Signalgenerator einfach erzeugbar. In einem zweiten Betriebsmodus wird ein rein binäres Signal 4 in der Form einer pseudo-zufälligen Bitfolge (PRBS) erzeugt, indem eine Abfolge entsprechender Analogwerte der PRBS einprogrammiert und erzeugt werden.

Ein solcher analoger Signalgenerator ist günstig erhältlich, selbst in einer portablen und für den Feldeinsatz tauglichen Form.

Für eine optimale Erfassung der Parameter des Kanals sind drei verschiedene Betriebsmodi des Signalgenerators erforderlich. Neben dem Sweep für die maximale Dämpfung und der PRBS für den Phasengang ist der Signalgenerator im dritten Betriebsmodus ausgeschaltet, bzw. es wird kein Signal erzeugt, wodurch allfälliges Rauschen im Bereich der Messvorrichtung gemessen werden kann.

Die Mess- und Auswertevorrichtung 6 umfasst Messgeräte und einen mobilen Computer mit einer Schnittstelle (PC-Crd) zu Anschliessen der Messgeräte, entsprechender Software und einem Datenspeicher zum Auswerten und Speichern der gemessenen Daten sowie einem Ausgabegerät, beispielsweise eine grafische Anzeige (Disp) oder ein Druckgerät.

Um den Messvorgang zu optimieren ist es vorteilhaft, wenn der Signalgenerator 2 automatisch durch eine lokale, programmierbare Steuereinheit oder vom allenfalls weit entfernten Ort der Messvorrichtung 6 aus umgeschaltet werden kann. Die lokale Steuereinheit, beispielsweise in der Form eines Kleinstcomputers, stellt in einer vorprogrammierbaren zeitlichen Abfolge die drei Betriebsmodi ein, und erlaubt so das automatische Messen der gewünschten Parameter. Für die Fernsteuerung ist eine entsprechende Kommunikationsleitung 5 erforderlich, welche beispielsweise in der Form einer einfachen drahtlosen Funkverbindung realisiert ist. Der Signalgenerator 2 und der an der Messvorrichtung angeschlossene Computer verfügen dabei über entsprechende Schnittstellen, welche über die Kommunikationsleitung 5 miteinander verbunden werden können. Alternativ zur einfachen Funkverbindung sind die beiden Schnittstellen über eine Internetverbindung miteinander verbunden, wobei der Signalgenerator über einen mobilen Internetanschluss (GSM, UMTS) verfügt.

Die Auswertung der gemessenen Daten sowie allenfalls die Fernsteuerung des Signalgenerators kann auch durch einen weit entfernten Computer übernommen werden. Ein solcher Computer kann beispielsweise über eine Internetverbindung (GSM, UMTS) mit dem mobilen Computer an der Messvorrichtung und allenfalls dem Signalgenerator selber verbunden sein.

Dies ermöglicht die Unterstützung und Überwachung der Messungen an beliebigen Orten der Welt durch eine zentrale Stelle. Die Installation der Ankopplung, welche in den meisten Fällen nicht nach einem vorherbestimmbaren Standard ausgeführt werden kann, wird von einem lokalen Monteur durchgeführt. Dieser Monteur schliesst auch den Signalgenerator sowie die Mess- und Auswertegeräte an. Dabei kann der beispielsweise mit einer Helmkamera ausgestattete Monteur über eine zweiweg akkustische Verbindung mit der zentralen Stelle kommunizieren und auf diese Weise Unterstützung beim Aufbau der Messvorrichtung und beim Durchführen der Messungen erhalten. Obwohl die zentrale Stelle die komplizierten Auswertungen weit entfernt durchführt, können allfällige Änderungen am zu vermessenden System dennoch unter Aufsicht der zentralen Stelle durch den Monteur sofort vorgenommen werden. Auf diese Weise können die Spezialisten für die Auswertung ohne aufwendiges Reisen die gewünschten Messungen durchführen.

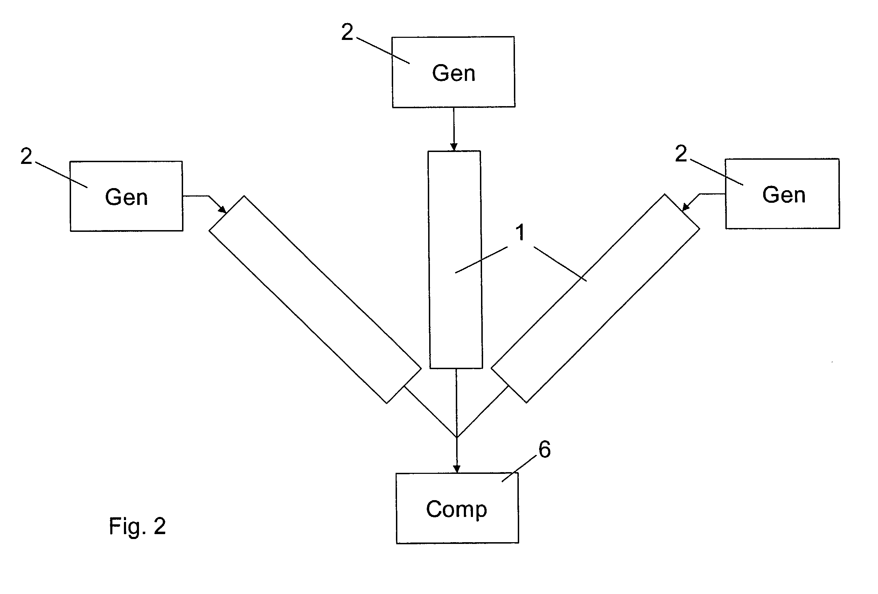

Zum Vermessen von mehreren Kanälen, welche gemäss Fig. 2 alle an einem zentralen Punkt zusammenkommen, werden vorteilhafterweise Signalgeneratoren 2 verwendet, welche mehrere verschiedene PRBS generieren können. So können gleichzeitig mehrere Signalgeneratoren, die eine unterschiedliche PRBS aussenden, an verschiedenen Einspeisepunkten eingesetzt werden, während am zentralen Empfangsort durch Korrelation mit den entsprechenden PRBS die verschiedenen Impulsantworten errechnet werden können, welche die Charakterisierung der Übertragungseingenschaften der Kanäle von den verschiedenen Einspeisepunkten zum Empfangsort erlauben.

Sind die gleichzeitig zum Einsatz kommenden PRBS orthogonal zueinander, können sie sich somit, abgesehen von der Erhöhung des allgemeinen Rauschpegels am Empfangsort, nicht gegenseitig beeinflussen.

Anstelle des Umzuges eines Signalgenerators von einem Einspeisepunkt zum nächsten, mit der immer wieder nötigen Messung am Empfangsort dazwischen, ist es dadurch möglich, zuerst mehrere Signalgeneratoren an verschiedenen Einspeisepunkten zu installieren, beispielsweise in Kellergeschossen verschiedener Häuser, und dann die verschiedenen Kanäle gleichzeitig auszumessen, ohne sich vom Empfangsort, beispielsweise einer Versorgungszentrale, entfernen zu müssen und ohne die Signalgeneratoren ausschalten zu müssen.

### Bezugszeichenliste

- 1: Kanal
- 2: Signalgenerator
- 3: Analoges Signal, Sweep
- 4: Binäres Sequenz, pseudozufällige Bitfolge (PRBS)
- 5: Drahtlose Kommunikationsleitung
- 6: Mess- und Auswertevorrichtung

## Patentansprüche

1. Verfahren zum Bestimmen der Übertragungseigenschaften mindestens eines elektrisch leitfähigen Kanals (1) zum Übertragen von elektrischen Kommunikationssignalen, bei welchem Verfahren
zum Bestimmen der Dämpfung und des Phasengangs Signale von einem Signalgenerator (2) erzeugt und an einer ersten Stelle in den Übertragungskanal eingespiesen werden, und die Signale an einer zweiten Stelle des Übertragungskanals gemessen und ausgewertet werden,
wobei zum Bestimmen der Dämpfung und/ oder des Phasengangs eine zu Diracstoss-ähnlichen Funktionen autokorrelierende binäre Sequenz (4) in den Übertragungskanal eingespiesen wird, wobei die binäre Sequenz (4) von einem portablen analogen Signalgenerator (1) als Abfolge von analogen Werten erzeugt wird.

2. Verfahren nach Anspruch 1, **dadurch gekennzeichnet, dass**
gleichzeitig für jeden von mehreren, an einer gemeinsamen Stelle zusammengeführten Übertragungskanälen (1) von je einem Signalgenerator (2) eine binäre Sequenz (4) erzeugt und jeweils an einer ersten Stelle in den Übertragungskanal (1) eingespiesen wird, wobei von den Signalgeneratoren unterschiedliche und zueinander orthogonale binäre Sequenzen erzeugt werden, und
an der gemeinsamen Stelle die überlagerten Signale gemessen und ausgewertet werden.

3. Verfahren nach Anspruch 1, **dadurch gekennzeichnet, dass** zum Bestimmen der Dämpfung und des Phasengangs unterschiedliche Signale von einem Signalgenerator (2) erzeugt und an der ersten Stelle in den Übertragungskanal (1) eingespiesen werden, wobei zum Bestimmen der Dämpfung ein analoges Sinussignal (3) und zum Bestimmen des Phasengangs die zu Diracstoss-ähnlichen Funktionen autokorrelierende binäre Sequenz (4) in den Übertragungskanal eingespiesen wird,
wobei das analoge Sinussignal (3) und die binäre Sequenz (4) von einem und dem selben, portablen analogen Signalgenerator (1) erzeugt werden.

4. Verfahren nach Anspruch 3, **dadurch gekennzeichnet, dass** der Signalgenerator (2) zwischen mindestens zwei Betriebsmodi umgeschaltet werden kann, wobei in einem ersten Betriebsmodus das analoge Sinussignal (3) und in einem zweiten Betriebsmodus die binäre Sequenz (4) erzeugt werden.

5. Verfahren nach Anspruch 4, **dadurch gekennzeichnet, dass** in einem dritten Betriebsmodus des Signalgenerators (2) kein Signal erzeugt wird.

6. Verfahren nach einem der Ansprüche 4 oder 5, **dadurch gekennzeichnet, dass** die Betriebsmodi des Signalgenerators (2) durch Fernsteuerung des Signalgenerators gewechselt werden.

7. Verfahren nach Anspruch 6, **dadurch gekennzeichnet, dass** der Signalgenerator (2) über eine drahtlose Kommunikationsleitung (5) ferngesteuert wird.

8. Verfahren nach einem der Ansprüche 4 oder 5, **dadurch gekennzeichnet, dass** die Betriebsmodi des Signalgenerators (2) automatisch gewechselt werden.

9. Verfahren nach Anspruch 8, **dadurch gekennzeichnet, dass** die Betriebsmodi des Signalgenerators (2) nach einer programmierbaren zeitlichen Abfolge gewechselt werden.

10. System zum Bestimmen der Übertragungseigenschaften mindestens eines elektrisch leitfähigen Kanals (1) mit weit auseinanderliegenden Enden zum Übertragen von elektrischen Kommunikationssignalen gemäss dem Verfahren eines der Ansprüche 1 bis 9, umfassend mindestens ein Signalgenerator (2) zum Einspeisen eines Testsignals (3, 4) an einer ersten Stelle des Übertragungskanals, und eine Vorrichtung (6) zum Messen und Auswerten des Testsignals am einer zweiten Stelle des Übertragungskanals, **dadurch gekennzeichnet, dass** der Signalgenerator (2) und die Mess- und Auswertevorrichtung (6) über eine Kommunikationsleitung (5) miteinander verbunden sind.

11. System nach Anspruch 10, **dadurch gekennzeichnet, dass** der Signalgenerator (2) und die Mess- und Auswertevorrichtung (6) über eine drahtlose Kommunikationsleitung (5) miteinander verbunden sind.
